# EUROPEAN PATENT SPECIFICATION

(11) **EP 3 730 552 B1**
(45) Date of publication and mention of the grant of the patent: **16.07.2025**
(21) Application number: 18891904.7
(22) Date of filing: 21.12.2018
(51) Int. Cl.: C08L 79/00, C08J 5/24, C08G 73/06, C08G 73/12, C08L 79/08, C08K 7/02, C08L 79/02, C08L 79/04

(54) **THERMOSETTING RESIN COMPOSITION**
WÄRMEHÄRTBARE HARZZUSAMMENSETZUNG
COMPOSITION DE RÉSINE THERMODURCISSABLE

(30) Priority: 22.12.2017 JP 2017246968
(43) Date of publication of application: 28.10.2020
(73) Proprietor: Teijin Limited, Osaka 530-0005 (JP)
(72) Inventor: SHOJI, Shinichiro, Osaka-shi, Osaka 530-0005 (JP); YAMAMOTO, Tomoyoshi, Osaka-shi, Osaka 530-0005 (JP)
(74) Representative: Carpmaels & Ransford LLP
(86) International application number: PCT/JP2018/047382
(87) International publication number: WO 2019/124558

(56) References cited:
- WO-A1-2016/132889
- JP-A- 2016 156 002
- JP-A- 2016 156 002
- JP-A- 2016 189 455
- JP-A- 2017 031 402
- JP-A- 2017 031 402

## Description

### FIELD

The present invention relates to a thermosetting resin composition.

### BACKGROUND

A cyanate ester compound is a compound having a cyanate group (-OCN). This compound is known to undergo polymerization while producing a triazine ring structure by cyclization and trimerization, and the resulting cured resin has very high heat resistance attributable to the triazine ring structure. Accordingly, a cured resin of the cyanate ester compound is used in the fields requiring high functionality, for example, in electronic material applications such as printed wiring board material, or in aerospace applications.

Patent Literatures (PTLs) 1 and 2 disclose such a cyanate ester-based composition.

In addition, an unsaturated imide compound is also known to give the same cured resin. A typical unsaturated imide compound is a bismaleimide compound, and it is known that an unsaturated bond of a maleimide group is polymerized to provide a cured resin having very high heat resistance. An unsaturated imide compound may also be used as a co-curing reactive compound and co-cured with a cyanate ester compound.

PTL 3 discloses a technique of capping the terminal carboxyl group of a polyester with a cyclic carbodiimide compound so as to suppress the hydrolysis of the polyester. In addition, PTL 4 discloses an epoxy resin composition containing a cyclic carbodiimide compound as a curing agent and discloses that such an epoxy resin composition has high heat resistance.

### [CITATION LIST]

### [PATENT LITERATURE]

[PTL 1] Japanese Unexamined Patent Publication No. 2015-89899
[PTL 2] Japanese Unexamined Patent Publication No. 2006-124494
[PTL 3] International Publication WO 2010/071213
[PTL 4] International Publication WO 2016/039486
WO2016/132889A1 relates to a curable resin composition and an encapsulating material using the same. JP2016189455A relates to a semiconductor device. JP2016156002A relates to a curable resin composition and a sealing material formed using the same. JP2017031402A relates to a thermosetting epoxy resin composition.

### SUMMARY

### [TECHNICAL PROBLEM]

An object of the present invention is to provide a cyanate ester-based curable resin composition having a high curing rate, very high heat resistance and very high long-term heat resistance, and a prepreg using the same.

### [SOLUTION TO PROBLEM]

The present inventors have found that the above-described object can be attained by the present invention having the following aspects.

### <<Aspect 1>>

A thermosetting resin composition including:
(A) a cyanate ester compound and/or (B) an unsaturated imide compound, and (C) a cyclic carbodiimide compound wherein, when present, the (A) cyanate ester compound is a compound represented by the following formula (1): 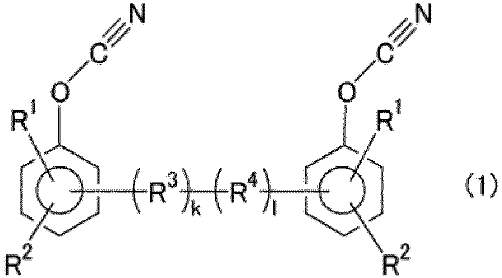 wherein R¹ and R² are the same or different and each represents hydrogen atom, an alkyl group or alkyl halide group having from 1 to 20 carbon atoms, or a halogen group;
   R³ are the same or different and each represents an organic group represented by the following chemical formula: 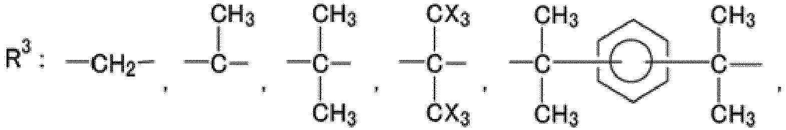 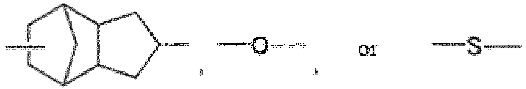 wherein R⁴ are the same or different and each represents an organic group represented by the following chemical formula: 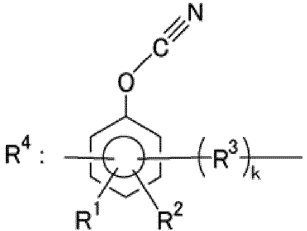 wherein k is 0 or 1; and l represents an integer of 0 to 10 wherein, when present, the (B) unsaturated imide compound is a bismaleimide compound; and
   wherein the (C) cyclic carbodiimide compound is a compound represented by the following formula (2-1): 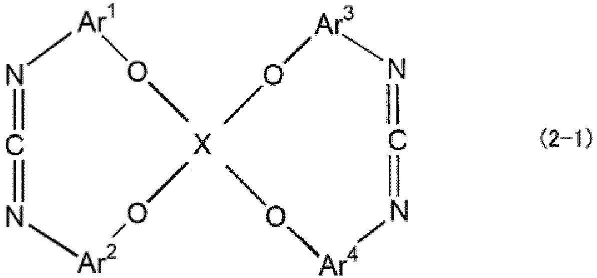 wherein X is a tetravalent group represented by the following formula (i): 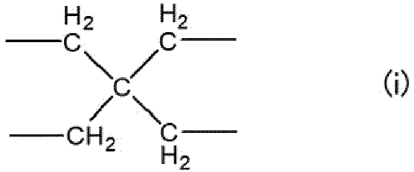 wherein each of Ar¹ to Ar⁴ is independently a divalent monocyclic or fused polycyclic alicyclic group, aromatic group or heterocyclic group, which may have a substituent, wherein the substituent is selected from the group consisting of an alkyl group having from 1 to 20 carbon atoms, an aryl group having from 6 to 15 carbon atoms, a halogen atom, a nitro group, an amide group, a hydroxyl group, an ester group, an ether group and an aldehyde group and when each of Ar¹ to Ar⁴ is a heterocyclic group, the heterocyclic group contains a heteroatom selected from the group consisting of O, N, S and P.

### <<Aspect 2>>

The thermosetting resin composition according to Aspect 1, comprising the cyanate ester compound (A).

### <<Aspect 3>>

The thermosetting resin composition according to Aspect 1, comprising the unsaturated imide compound (B).

### <<Aspect 4>>

The thermosetting resin composition according to any one of Aspects 1 to 3, including:
the (A) cyanate ester compound,
the (B) unsaturated imide compound, and
the (C) cyclic carbodiimide compound.

### <<Aspect 5>>

The thermosetting resin composition according to Aspect 4, wherein the (C) cyclic carbodiimide compound is contained in a range of 1 to 30 parts by mass per 100 parts by mass of the total of the (A) cyanate ester compound and the (B) unsaturated imide compound.

### <<Aspect 6>>

The thermosetting resin composition according to Aspect 4 or 5, wherein the (A) cyanate ester compound and the (B) unsaturated imide compound are contained at a mass ratio of 90:10 to 50:50.

### <<Aspect 7>>

A molded article including a cured product of the thermosetting resin composition according to any one of Aspects 1 to 6.

### <<Aspect 8>>

A prepreg including a reinforcing fiber substrate impregnated with the thermosetting resin composition according to any one of Aspects 1 to 6.

### <<Aspect 9>>

A fiber-reinforced composite material obtained by curing the prepreg according to Aspect 8.

### DESCRIPTION OF EMBODIMENTS

The thermosetting resin composition of the present invention comprises (A) a cyanate ester compound and/or (B) an unsaturated imide compound, and (C) a cyclic carbodiimide compound.

As described above, it is thought that (A) a cyanate ester group produces a triazine ring structure by cyclization and trimerization of a cyanate group (-OCN) and a cyanate ester-based resin thereby exhibits very high heat resistance. In addition, (B) an unsaturated imide compound is also known to give a cured resin having very high heat resistance due to polymerization of an unsaturated bond of a maleimide group.

The present inventors have found that when the cyanate ester-based resin and/or (B) unsaturated imide compound having very high heat resistance contains a small amount of a cyclic carbodiimide compound in its monomer, a polymer having a higher glass transition temperature is obtained. Furthermore, although a conventional resin deteriorates in heat resistance when processed at a high temperature for a long time, a cured resin obtained from the resin composition of the present invention is not substantially deteriorated in heat resistance even when processed at a high temperature for a long time. It is extremely difficult for conventional techniques to obtain such a cyanate ester-based cured resin or imide-based cured resin having very high heat resistance and very high long-term heat resistance, and the resin can be expected to further expand its application range in the fields requiring high functionality, such as electronic material applications and aerospace applications.

It has also been found that the thermosetting resin composition of the present invention has a high curing rate, compared with a composition not containing a cyclic carbodiimide compound. Unexpectedly, the composition of the present invention starts the curing reaction early, compared with a composition not containing a cyclic carbodiimide compound, nevertheless, its cured product has very high heat resistance and very high long-term heat resistance.

Without being bound by theory, it is believed that since the thermosetting resin composition of the present invention contains a cyclic carbodiimide compound, a reaction occurs between a cyanate group and/or an unsaturated imide group and a carbodiimide group, in addition to the multimerization reaction of the cyanate ester compound and/or the polymerization reaction of the unsaturated imide compound. It is believed that due to occurrence of a reaction between such a functional group and a carbodiimide group, a heterocyclic ring having a high nitrogen content is formed and this allows for exhibiting very high heat resistance. It is also believed that even when a thermal decomposition of the cyanate ester compound and/or unsaturated imide compound occurs, the terminal cleaved by the thermal decomposition reacts to restore a carbodiimide group and the isocyanate group produced in association therewith serves as a further curing component and makes it possible to exhibit long-term heat resistance.

### <(A) Cyanate Ester Compound>

The thermosetting resin composition of the present invention can contain (A) a cyanate ester compound. The (A) cyanate ester compound is represented by formula (1). For example, the (A) cyanate ester compound can be a compound having two to four, or two to three, cyanate groups and one to three, or up to two, aromatic rings or fused rings which each may have a substituent. In the present description, the (A) cyanate ester compound encompasses a cyanate ester compound and a prepolymer thereof.

Specific examples of the (A) cyanate ester compound include 1,3- or 1,4-dicyanatobenzene, 1,3,5-tricyanatobenzene, 1,3-, 1,4-, 1,6-, 1,8-, 2,6- or 2,7-dicyanatonaphthalene, 1,3,6-tricyanatonaphthalene, 4,4-dicyanatobiphenyl, bis(4-cyanatophenyl)methane, bis(3,5-dimethyl-4-cyanatophenyl)methane, 2,2-bis(4-cyanatophenyl)propane, 2,2-bis(3,5-dibromo-4-cyanatophenyl)propane, 2,2-bis(3,5-dimethyl-4-cyanatophenyl)propane, bis(4-cyanatophenyl)ether, bis(4-cyanatophenyl)thioether, bis(4-cyanatophenyl)sulfone, tris(4-cyanatophenyl)phosphite, tris(4-cyanatophenyl)phosphate, a cyanate ester compound obtained by a reaction of an oligomer of novolac or hydroxyl group-containing thermoplastic resin (e.g., hydroxypolyphenylene ether, hydroxypolystyrene, hydroxypolycarbonate) with a cyanogen halide, and a cyanate ester compound obtained by reacting a polyfunctional phenol in which the phenol is bonded to dicyclopentadiene, with a cyanogen halide, and one of these or an appropriate mixture of two or more thereof can be used.

As the (A) cyanate ester compound, 1,3- or 1,4-dicyanatobenzene, 1,3,5-tricyanatobenzene, bis(3,5-dimethyl-4-cyanatophenyl)methane, bis(4-cyanatophenyl)methane, 2,2-bis(4-cyanatophenyl)propane, and phenol novolac cyanate are preferred, and 2,2-bis(4-cyanatophenyl)propane is more preferred. Prepolymers having a molecular weight of 400 to 6,000 and having a triazine ring formed by trimerization of a cyanate group of these cyanate ester compounds are favorably used.

The (A) cyanate ester compound includes a compound represented by the following formula (1):

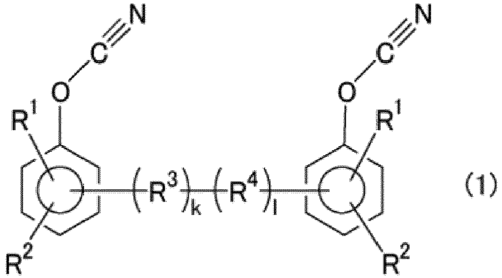

wherein R¹ and R² are the same or different and each represents hydrogen atom, an alkyl group or alkyl halide group having from 1 to 20 carbon atoms, or a halogen group;
R³ are the same or different and each represents an organic group represented by the following chemical formula: 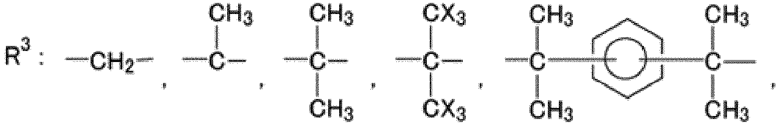 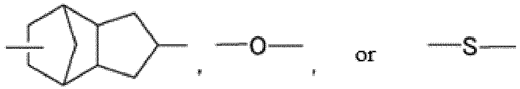 wherein R⁴ are the same or different and each represents an organic group represented by the following chemical formula: 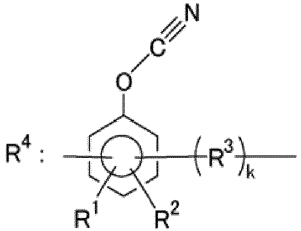 wherein k is 0 or 1; and 1 represents an integer of 0 to 10.

The compound represented by formula (1) includes, although there is some overlap with specific examples of the above-described cyanate ester compound, for example, bis(4-cyanatophenyl)methane, bis(3,5-dimethyl-4-cyanatophenyl)methane, a divalent phenol cyanate ester such as bis(3-methyl-4-cyanatophenyl)methane, bis(4-cyanatophenyl)-1,1-ethane, bis(4-cyanatophenyl)-2,2-ethane, 2,2-bis(4-cyanatophenyl)propane, 2,2-bis(3,5-dimethyl-4-cyanatophenyl)methane, di(4-cyanatophenyl)ether, di(4-cyanatophenyl)thioether, 4,4-{ 1,3-phenylenebis(1-methylethylidene)}bisphenyl cyanate, 4,4-dicyanatophenyl, 2,2-bis(4-cyanatophenyl)-1,1,1,3,3,3-hexafluoropropane, 1,1'-bis-(p-cyanatophenyl)-ethane, 2,2'-bis(p-cyanatophenyl)propane, 4,4'-methylenebis(2,6-dimethylphenyl cyanate), 2,2'-bis(p-cyanatophenyl)hexafluoropropane and α,α'-bis(4-cyanatophenyl)-m-diisopropylbenzene; a trivalent phenol cyanate ester such as tris(4-cyanatophenyl)-1,1,1-ethane and bis(3,5-dimethyl-4-cyanatophenyl)-4-cyanatophenyl-1,1,1-ethane; a phenol novolac-type cyanate ester, a cresol novolac-type cyanate ester, a dicyclopentadiene bisphenol-type cyanate ester; etc. Among these, in view of dielectric property, curability, etc. of the cured product, 2,2-bis(4-cyanatophenyl)propane and a phenol novolac-type cyanate ester are preferred.

As the (A) cyanate ester compound, a prepolymer (e.g., trimer, pentamer) obtained by forming a triazine ring structure by cyclization of a cyanate group possessed by the compound represented by formula (1) may also be used. Among others, in view of operability or solubility in other curable resins, a trimer is preferred.

The prepolymer may be obtained by subjecting a monomer of the cyanate ester compound above to polymerization using, as a catalyst, for example, acids such as mineral acid and Lewis acid; a base such as sodium alcoholate, etc. and tertiary amines; and salts such as sodium carbonate.

### <(B) Unsaturated Imide Compound>

The thermosetting resin composition of the present invention can contain (B) an unsaturated imide compound.

The compound having a maleimide group is bismaleimide compound (bismaleimide resin). The bismaleimide compound is not particularly limited as long as it is a compound having two or more maleimide groups in the molecule. The compound includes, for example, co-condensed products of bismaleimide and an aldehyde compound, and one of these or two or more thereof may be used. Furthermore, the compound having a maleimide compound includes an aromatic maleimide in which maleimide is bonded to an aromatic ring, and in particular, includes an aromatic bismaleimide in which a maleimide group is bonded to each of two aromatic rings.

The bismaleimide compound includes, for example, 4,4'-diphenylmethanebismaleimide, N,N'-ethylenebismaleimide, N,N'-hexamethylenebismaleimide, N,N'-m-phenylenebismaleimide, N,N'-p-phenylenebismaleimide, 2,2-bis[4-(4-maleimidophenoxy)phenyl]propane, bis[4-(4-maleimidophenoxy)phenyl]methane, 1,1,1,3,3,3-hexafluoro-2,2-bis[4-(4-maleimidophenoxy)phenyl]propane, N,N'-p,p'-diphenyldimethylsilylbismaleimide, N,N'-4,4'-diphenyletherbismaleimide, N,N'-methylenebis(3-chloro-p-phenylene)bismaleimide, N,N'-4,4'-diphenylsulfonebismaleimide, N,N'-4,4'-dicyclohexylmethanebismaleimide, N,N'-dimethylenecyclohexanebismaleimide, N,N'-m-xylenebismaleimide, N,N'-4,4'-diphenylcyclohexanebismaleimide, N-phenylmaleimide, polyphenylmethanemaleimide, etc. Among others, the aldehyde compound above includes, for example, formaldehyde, acetaldehyde, benzaldehyde, hydroxyphenylaldehyde, etc.

The compound having a nadimide group is not particularly limited but is preferably an imidation reaction product of an aromatic amine compound and a norbornene dicarboxylic anhydride. The nadimide compound is not particularly limited as long as it is a compound having two or more nadimide groups within the molecule, and one of these compounds or two or more thereof may be used.

The nadimide compound includes, for example, 4,4'-diphenylmethanebisnadimide, N,N'-ethylenebisnadimide, N,N'-hexamethylenebisnadimide, N,N'-m-phenylenebisnadimide, N,N'-p-phenylenebisnadimide, 2,2-bis[4-(4-nadimidophenoxy)phenyl]propane, bis[4-(4-nadimidophenoxy)phenyl]methane, 1,1,1,3,3,3-hexafluoro-2,2-bis[4-(4-nadimidophenoxy)phenyl]propane, N,N'-p,p'-diphenyldimethylsilylbisnadimide, N,N'-4,4'-diphenyletherbisnadimide, N,N'-methylenebis(3-chloro-p-phenylene)bis-nadimide, N,N'-4,4'-diphenylsulfonebisnadimide, N,N'-4,4'-dicyclohexylmethanebisnadimide, N,N'-dimethylenecyclohexanebisnadimide, N,N'-m-xylenebisnadimide, N,N'-4,4'-diphenylcyclohexanebisnadimide, N-phenylnadimide, etc. Among others, the aldehyde compound above includes, for example, formaldehyde, acetaldehyde, benzaldehyde, hydroxyphenylaldehyde, etc.

The (B) unsaturated imide compound can be incorporated into the thermosetting resin composition in an amount of 10 parts by mass or more, 20 parts by mass or more, 50 parts by mass or more, 100 parts by mass or more, 150 parts by mass or more, or 20 parts by mass or more, and can be incorporated into the thermosetting resin composition in an amount of 500 parts by mass or less, 400 parts by mass or less, 300 parts by mass or less, 200 parts by mass or less, 150 parts by mass or less, 100 parts by mass or less, 50 parts by mass or less, or 30 parts by mass or less, per 100 parts by mass of the (A) cyanate ester compound. For example, in the thermosetting resin composition, the (A) cyanate ester compound and the (B) unsaturated imide compound may be contained at a mass ratio of 90:10 to 50:50 or 80:20 to 60:40.

### <(C) Cyclic Carbodiimide Compound>

The (C) cyclic carbodiimide compound is a compound of formula (2-1) which is a compound containing a divalent carbodiimide group (-N=C=N-) in a part of the cyclic structure. The (C) cyclic carbodiimide compound to contain only one carbodiimide group in one cyclic structure.

From the viewpoint of enhancing the heat resistance of the curable resin, the (C) cyclic carbodiimide compound is preferably a polyvalent cyclic carbodiimide compound containing two or more carbodiimide groups per molecule. Above all, in the case of using the compound as a curing agent of the thermosetting resin composition, in view of curing performance, the compound preferably contains two or three carbodiimide groups per molecule. Two or more of these cyclic carbodiimide compounds can be used in combination.

The molecular weight of the (C) cyclic carbodiimide compound is preferably from 100 to 1,000. Within this range, a problem with the structural stability and volatility of the (C) cyclic carbodiimide compound is less likely to arise, and the yield when synthesizing the (C) cyclic carbodiimide compound is relatively improved. From this point of view, the molecular weight is more preferably from 100 to 750, still more preferably from 250 to 750.

For example, the (C) cyclic carbodiimide compound may be a compound having a cyclic structure represented by the following formula (2): 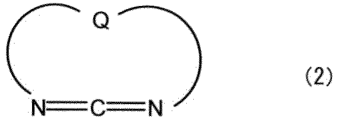 wherein Q is a divalent to tetravalent linking group which is an aliphatic group, an alicyclic group, an aromatic group, or a combination thereof and may contain a heteroatom and/or a substituent.

In the formula, Q is preferably a group represented by -Ar^{a}-O-X-O-Ar^{b}-. Each of Ar^{a} and Ar^{b} is independently a monocyclic or fused polycyclic alicyclic group, aromatic group or heterocyclic group, which may have a substituent, and is preferably a phenylene group or a naphthalene-diyl group, which may have a substituent. In this case, the substituent includes an alkyl group having from 1 to 20 carbon atoms, an aryl group having from 6 to 15 carbon atoms, a halogen atom, a nitro group, an amide group, a hydroxyl group, an ester group, an ether group, an aldehyde group, etc. and is preferably an alkyl group having from 1 to 6 carbon atoms or a phenyl group. X is preferably an alkanediyl group in the case of having two cyclic structures and is preferably an alkanetetrayl group in the case of having four cyclic structures.

The (C) cyclic carbodiimide compound is a compound represented by formula (2-1):

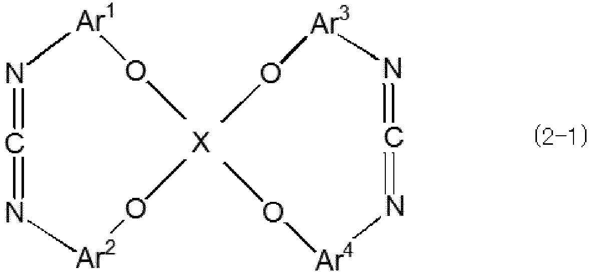

In the formula, X is a tetravalent group represented by the following formula (i). Each of Ar¹ to Ar⁴ is independently a divalent monocyclic or fused polycyclic alicyclic group, aromatic group or heterocyclic group, which may have a substituent, and is preferably an orthophenylene group or a 1,2-naphthalene-diyl group, which may have a substituent. The substituent includes an alkyl group having from 1 to 20 carbon atoms, an aryl group having from 6 to 15 carbon atoms, a halogen atom, a nitro group, an amide group, a hydroxyl group, an ester group, an ether group, an aldehyde group, etc. In the case where each of Ar¹ to Ar⁴ is a heterocyclic group, the heterocyclic group contains a heteroatom selected from the group consisting of O, N, S and P.

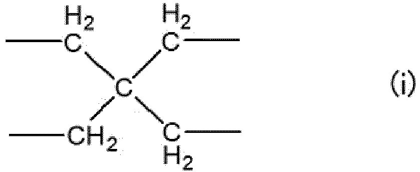

Examples of the (C) cyclic carbodiimide compound which can be favorably used include a compound represented by the following formula (2-2) or (2-3):

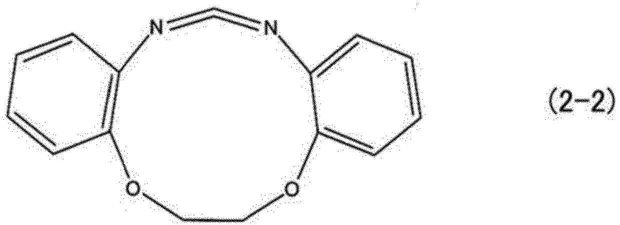

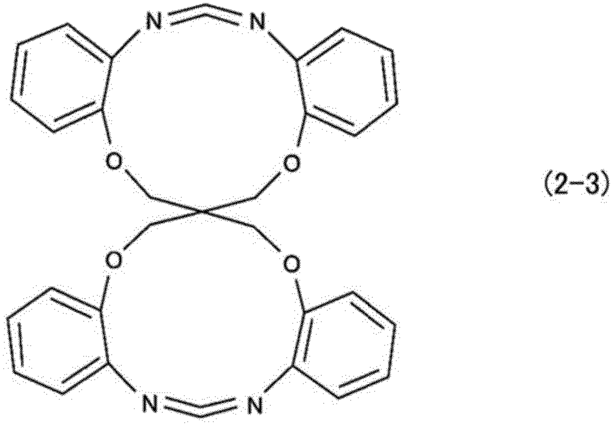

The (C) cyclic carbodiimide compound can be incorporated into the thermosetting resin composition in an amount of 1 part by mass or more, 3 parts by mass or more, 5 parts by mass or more, 10 parts by mass or more, 12 parts by mass or more, or 15 parts by mass or more, and can be incorporated into the thermosetting resin composition in an amount of 30 parts by mass or less, 20 parts by mass or less, 15 parts by mass or less, or 10 parts by mass or less, per 100 parts by mass of the (A) cyanate ester compound and/or the (B) unsaturated imide compound.

### <Others>

In the thermosetting resin composition of the present invention, other thermosetting resins or thermoplastic resins, such as epoxy resin and phenol resin, may be used in combination, if desired. Such resins include the resins disclosed as a resin that can be used in combination in the resin described in PTL 2. On the other hand, in the present invention, a composition not containing these other resins is also preferred so as to obtain very high heat resistance. For example, in the thermosetting resin composition, the content of other resin components may be 50 parts by mass or less, 30 parts by mass or less, 20 parts by mass or less, 10 parts by mass or less, 5 parts by mass or less, 3 parts by mass or less, 1 part by mass or less, or 0.1 parts by mass or less, per 100 parts by mass of the total of the (A) cyanate ester compound, the (B) unsaturated imide compound and the (C) cyclic carbodiimide compound.

The thermosetting resin composition of the present invention is cured by heating, but for the purpose of further promoting the curing, a known curing catalyst or curing accelerator may be additionally blended.

In the thermosetting resin composition of the present invention, as long as the original properties of the composition are not impaired, various additives can be blended according to the purpose of its end use. These additives are natural or synthetic resins, an inorganic or organic fibrous reinforcement, a filler, etc. and are used in appropriate combination as needed. In addition, various additives such as dye, pigment, thickener, lubricant, dispersant, leveling agent, photosensitizer, flame retardant, brightening agent, polymerization inhibitor and thixotropy-imparting agent are used in appropriate combination as needed.

### <<Curing Method of Thermosetting Resin>>

The curing conditions of the above-described thermosetting resin composition vary depending on, for example, the component ratio of the resin composition or the presence or absence of the additional curing catalyst or curing accelerator, but the composition can be heat-treated for a predetermined time by appropriately selecting the temperature in the range of usually from 100 to 300°C to obtain a heat-cured product. On this occasion, the pressure setting is not particularly limited, but in general, it is preferable to apply a pressure, and the pressure may be appropriately selected in the range of usually from 0.01 to 50 MPa, preferably from 0.5 to 15 MPa.

### <<Molded Article>>

The molded article of the present invention can be obtained by curing the above-described thermosetting resin composition and may have various forms such as plate shape, sheet shape and three-dimensional shape. In the case of obtaining the molded article, a known molding method such as transfer molding, sheet molding, compression molding and press molding may be used. In addition, the thermosetting resin composition in a liquid state may be applied on a sheet substrate by means of a bar coater, a die coater, a doctor blade, a baker applicator, etc. and cured to form a laminate of the cured product and the sheet substrate, or the cured product may be separated from the sheet substrate to take on a sheet shape.

Incidentally, the usage of the molded article includes a prepreg, a metal foil-clad laminate, a resin sheet, an insulating layer of a printed wiring board, a semiconductor package material, etc.

### <<Prepreg>>

The prepreg of the present invention is prepared by impregnating a reinforcing fiber substrate with the above-described thermosetting resin composition. The prepreg of the present invention has very high heat resistance and very high long-term heat resistance and therefore, is extremely useful in the fields requiring high functionality, such as electronic material applications and aerospace applications. The prepreg of the present invention can adopt the same configuration and production method as those for the conventional prepreg formed from a thermosetting resin composition using a cyanate ester compound, etc.

The reinforcing fiber constituting the reinforcing fiber substrate includes carbon fiber, glass fiber, aramid fiber, silicon carbide fiber, polyester fiber, ceramic fiber, alumina fiber, boron fiber, metal fiber, mineral fiber, rock fiber, slag fiber, etc. Of these reinforcing fibers, carbon fiber, glass fiber, and aramid fiber are preferred; carbon fiber that gives a lightweight high-strength fiber-reinforced composite material with improved specific strength and specific modulus is more preferred; and among carbon fibers, a polyacrylonitrile (PAN)-based carbon fiber having excellent tensile strength is still more preferred.

The shape of the reinforcing fiber substrate is not limited, but a sheet-shaped material is preferred in view of processability. The reinforcing fiber sheet includes, for example, a sheet-shaped material obtained by unidirectionally aligning a number of reinforcing fibers, a bidirectional fabric such as plain weave or twill weave, a multi-axial fabric, a nonwoven fabric, a mat, a knit, a braid, and a paper obtained by subjecting reinforcing fibers to papermaking. The thickness of the reinforcing fiber sheet is preferably from 0.01 to 3 mm, more preferably from 0.1 to 1.5 mm. In addition, the basis weight of the reinforcing fiber sheet is preferably from 70 to 400 g/m², more preferably from 100 to 300 g/m².

The content of the thermosetting resin composition in the prepreg is preferably from 20 to 60 parts by mass, more preferably from 30 to 50 parts by mass, relative to the total mass of the reinforcing fiber substrate and the thermosetting resin composition. Within this range, the possibility of generating a void, etc. inside the fiber-reinforced composite material is low, and the content of the reinforcing fiber becomes sufficiently high, so that the strength of the prepreg obtained can be increased.

The prepreg can be produced by impregnating the inside of the reinforcing fiber substrate with the thermosetting resin composition. As the method for impregnating the inside of the reinforcing fiber substrate with the thermosetting resin composition, a known wet process or dry process can be used. Among these, it is preferable to use a hot-melt method that is a dry process.

In the hot-melt method, a stack of the thermosetting resin composition and a reinforcing fiber substrate is heated under pressure, thereby reducing the viscosity of the thermosetting resin composition and impregnating the inside of the reinforcing fiber substrate with the thermosetting resin composition. In the case where the reinforcing fiber substrate is a sheet-shaped material, the resin composition formed into a film shape is preferably stacked on the reinforcing fiber substrate.

### <<Fiber-Reinforced Composite Material>>

The fiber-reinforced composite material of the present invention is obtained by curing the above-described prepreg by a known method. The method for producing the fiber-reinforced composite material by using the prepreg of the present invention includes conventionally known methods, for example, a method of using manual lay-up, automated tape lay-up (ATL), automated fiber placement, vacuum bagging, autoclave cure, out of autoclave cure, fluid assisted processing, pressure assisted processes, matched mold processes, simple press cure, press-clave cure, or continuous band pressing.

The fiber-reinforced composite material may be a copper-clad laminate obtained by laminating a copper foil on the prepreg and curing the stack or may be a printed wiring board manufactured from the copper-clad laminate.

The present invention is described more specifically below by referring to Examples.

### EXAMPLES

### Experiment 1: Experiment with respect to a composition containing (A) a cyanate ester compound, (B) an unsaturated imide compound, and (C) a cyclic carbodiimide compound

### <<Example 1 and Comparative Examples 1 and 2>>

### <Production Example>

Bisphenol A dicyanate (hereinafter, referred to as "BADCY") that is a representative compound as the (A) cyanate ester compound; 4,4'-phenylmethanebismaleimide (hereinafter, referred to as "BMI") that is a representative compound as the (B) unsaturated imide compound; and as the (C) cyclic carbodiimide compound, a compound (hereinafter, referred to as "SX-1") represented by the following formula (2-3), were prepared. In addition, a cobalt naphthenate mineral spirit solution (6 w/v%, hereinafter referred to as "Co naphthenate") was prepared as the curing catalyst used in the reaction of the (A) cyanate ester compound with the (B) unsaturated imide compound.

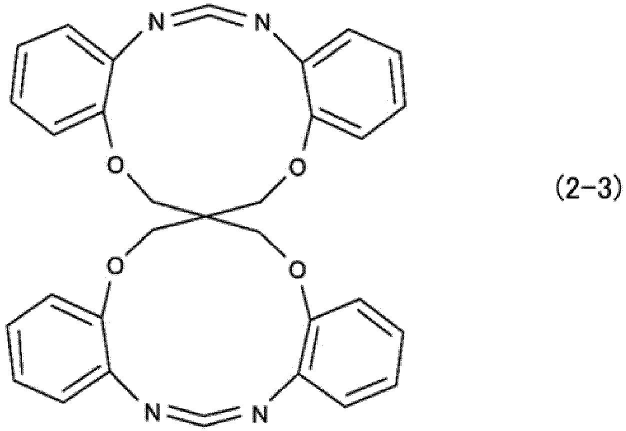

3.5 g of the (A) cyanate ester compound above was charged into a 30-ml scale screw tubular vial and after raising the temperature by use of a constant-temperature drier "ON-300S" (manufactured by AS ONE Corporation) until the inner temperature reaches 150°C, the contents were taken out and thoroughly stirred with a stirring bar. This operation was repeated to melt the (A) cyanate ester compound. Furthermore, 1.5 g of the (B) unsaturated imide compound was added and dissolved by the same operation. Finally, the (C) cyclic carbodiimide compound or the curing catalyst was added in the amount shown in Table 1, and these were quickly mixed to produce a uniform resin composition. In addition, a composition containing the (A) cyanate ester compound and the (B) unsaturated imide compound, in which the (C) cyclic carbodiimide compound and curing catalyst are not added, was also prepared. In this way, the thermosetting resin compositions of Example 1 and Comparative Examples 1 and 2 were produced.

### <Evaluation>

On a Teflon-coated stainless steel plate, 1 g of the resin composition was set and cured at 150°C for 0.5 hours, at 170°C for 2 hours, and finally at 240°C by using a constant-temperature drier "ON-300S" (manufactured by AS ONE Corporation).

During curing at 240°C, sampling was performed after the elapse of 0.5 hours, 1 hour, 2 hours, and 4 hours, and Tg measurement was conducted at each sampling.

In the Tg measurement, the glass transition temperature (Tg) was measured using DSC (TA-2920, manufactured by TA Instruments) by raising the temperature of the produced thermosetting resin composition, in a first cycle, up to 320°C at 20°C/min under a nitrogen flow.

### <Results>

The results are shown together in Table 1.

**Table 1**

| | (A) BADCY | (B) BMI | (C) SX-1 | Co Naphthenate | Change in Tg Over Time When Heated at 240°C | | | |
|---|---|---|---|---|---|---|---|---|
| | | | | | after 0.5 h | after 1.0 h | after 2.0 h | after 4.0 h |
| Example 1 | 70 | 30 | 10 | - | 239 | 245 | 257 | 256 |
| Comparative Example 1 | 70 | 30 | - | - | uncured | 232 | 245 | 229 |
| Comparative Example 2 | 70 | 30 | - | 0.1 | 207 | 225 | 240 | 232 |

In Comparative Example 1 where neither a cyclic carbodiimide compound nor a curing catalyst is contained, the time necessary for curing was long and moreover, Tg was greatly reduced after 4 hours of heating. In Comparative Example 2 where a curing agent is contained, the time necessary for curing was relatively short, but the maximum Tg was low, and Tg was reduced after 4 hours of heating. On the other hand, the thermoplastic resin composition of the present invention containing a cyclic carbodiimide compound maintained high Tg even after 4 hours of heating while having very high Tg after 0.5 hours of heating at 240°C.

### <<Example 2 and Comparative Example 3>>

### <Production Example>

The same experiment as the experiment above was performed using bis(3-ethyl-5-methyl-4-maleimidophenyl)methane as the (B) unsaturated imide compound.

More specifically, 1.3 g of the (A) cyanate ester compound (BADCY) was charged into a 13.5-ml scale glass cup ((GC-24) manufactured by AS ONE Corporation) and after raising the temperature by use of a constant-temperature drier "ON-300S" (manufactured by AS ONE Corporation) until the inner temperature reaches 160°C, the contents were taken out and thoroughly stirred with a stirring bar. This operation was repeated to melt the cyanate ester compound. Furthermore, 0.13 g of the (C) cyclic carbodiimide compound (SX-1) was added and dissolved by the same operation. Finally, 0.69 g of the (B) unsaturated imide compound above was added and dissolved by the same operation to produce a uniform resin composition of Example 2. In addition, a composition of Comparative Example 3 containing only the (A) cyanate ester compound and the (B) unsaturated imide compound, in which the (C) cyclic carbodiimide compound is not added, was also prepared.

### <Evaluation and Results>

On a Teflon-coated stainless steel plate, 1 g of the resin composition was set and cured at 150°C for 0.5 hours, at 170°C for 2 hours, and finally at 240°C by using a constant-temperature drier "ON-300S" (manufactured by AS ONE Corporation), as a result, similarly to the experiment above, curing acceleration was confirmed in the resin composition of Example 2 containing a cyclic carbodiimide compound.

### Experiment 2: Experiment with respect to a composition containing (A) a cyanate ester compound and (C) a cyclic carbodiimide compound

### <<Example 3 and Comparative Example 4>>

### <Production Example>

0.5 g of the (A) cyanate ester compound (BADCY) was charged into a 13.5-ml scale glass cup ((GC-24) manufactured by AS ONE Corporation) and after raising the temperature by use of a constant-temperature drier "ON-300S" (manufactured by AS ONE Corporation) until the inner temperature reaches 160°C, the contents were taken out and thoroughly stirred with a stirring bar. This operation was repeated to melt the (A) cyanate ester compound. Furthermore, 0.1 g of the (C) cyclic carbodiimide compound (SX-1) was added and dissolved by the same operation to produce a resin composition of Example 3. In addition, a composition of Comparative Example 4 containing only the (A) cyanate ester compound (BADCY), in which the (C) cyclic carbodiimide compound is not added, was also prepared.

### <Evaluation and Results>

On a Teflon-coated stainless steel plate, 1 g of the resin composition was set and cured at 150°C for 0.5 hours and at 170°C for 2 hours by using a constant-temperature drier "ON-300S" (manufactured by AS ONE Corporation), as a result, curing acceleration was confirmed in the resin composition of Example 3 containing a cyclic carbodiimide compound.

### Experiment 3: Experiment with respect to a composition containing (B) an unsaturated imide compound and (C) a cyclic carbodiimide compound

### <<Example 4 and Comparative Example 5>>

### <Production Example>

0.5 g of the (B) unsaturated imide compound (BMI) was charged into a 13.5-ml scale glass cup ((GC-24) manufactured by AS ONE Corporation) and after raising the temperature by use of a constant-temperature drier "ON-300S" (manufactured by AS ONE Corporation) until the inner temperature reaches 160°C, the contents were taken out and thoroughly stirred with a stirring bar. This operation was repeated to melt the (B) unsaturated imide compound. Furthermore, 0.1 g of the (C) cyclic carbodiimide compound (SX-1) was added and dissolved by the same operation. In addition, a composition of Comparative Example 5 containing only the (B) unsaturated imide compound (BMI), in which the (C) cyclic carbodiimide compound is not added, was also prepared.

### <Evaluation and Results>

On a Teflon-coated stainless steel plate, 0.4 g of the resin composition was set and cured at 150°C for 0.5 hours and at 170°C for 2 hours by using a constant-temperature drier "ON-300S" (manufactured by AS ONE Corporation), as a result, curing acceleration was confirmed in the resin composition of Example 4 containing a cyclic carbodiimide compound.

### Experiment 4: Test of molded article

### <<Example 5 and Comparative Example 6>>

### <Production of Resin Sheet>

50.96 g of the (A) cyanate ester compound (BADCY) was charged into a 100-ml scale heat-resistant beaker and after raising the temperature by use of a constant-temperature drier "ON-300S" (manufactured by AS ONE Corporation) until the inner temperature reaches 210°C, the contents were taken out and thoroughly stirred with a stirring bar. This operation was repeated to melt the (A) cyanate ester compound. Subsequently, 5.096 g of the (C) cyclic carbodiimide compound (SX-1) was added and dissolved by the same operation.

Furthermore, 21.84 g of the (B) unsaturated imide compound (BMI) was added and dissolved by the same operation. The resulting mixed solution was cast in the prepared mold and defoamed for 10 minutes in full vacuum at an inner temperature of 165°C by using a vacuum drier "AVO-250N" (manufactured by AS ONE Corporation). As for the mold, a curing mold for resin sheet, having an outside diameter of 14 cm×10 cm square, an inside diameter of 12 cm×8 cm square and a height of 1.2 cm, was produced by cutting silicon rubber sheets (produced by AS ONE Corporation) having a thickness of 1 cm and a thickness of 2 mm and used by sticking an adhesive VALFLON tape onto its bottom.

After the defoaming, the mold having cast thereinto the mixed solution was quickly charged into a constant-temperature drier "ON-300S" (manufactured by AS ONE Corporation) in which the temperature had been raised until the inner temperature reaches 170°C, and curing was performed at 170°C for 2 hours. Subsequently, the mold was once taken out and after raising the temperature until the inner temperature of the constant-temperature drier reaches 240°C, again charged, and curing was performed for 4 hours.

The obtained resin sheet was cut out with a diamond saw (manufactured by LUXO), and a specimen suited to the size in each physical property evaluation was prepared using sandpaper (manufactured by ESCO, Ltd.) # 240, #1000 and #2000. In addition, with respect to a specimen for bend test, mirror finishing with an alumina suspension (Bukowski Japan) was additionally performed.

Furthermore, a composition containing only the (A) cyanate ester compound and the (B) unsaturated imide compound but not containing the (C) cyclic carbodiimide compound was also prepared. However, the melting temperature at the time of melt-mixing respective components was changed from 210 to 180°C.

In this way, resin specimens of the thermosetting resin compositions of Example 5 and Comparative Example 6 were produced.

### <Evaluation>

Using the prepared specimen (44 mm×12 mm×2 mm), DMA measurement was performed under the following conditions, and E" and tan δ were determined from the chart.
· Measuring apparatus: "RSA-3" manufactured by TA Instruments
· Measurement atmosphere: nitrogen
. Temperature rise rate: 5 K/min
· Temperature range: from 100 to 320°C (Comparative Example 3), from 100 to 350°C

### (Example 2)

· Vibration frequency: 10 Hz
· Strain: 0.1% (set value)
· Geometry: three-point bending (between lower beams: 40 mm)
· Sample width: 12 mm, sample thickness: 2 mm
· Static load/dynamic load ratio=1.1

Using the prepared specimen (80 mm×10 mm×4 mm), measurement by Tensilon was performed under the following conditions, and the modulus and elongation at break were determined from the measured values.
· Measuring apparatus: "RTC-1225A" manufactured by ORIENTEC Corporation · Load cell: "UR-1kN-D" manufactured by ORIENTEC Corporation
. Measurement standard: JIS K7171
. Test speed: 2 mm/min
· Geometry: three-point bending
· Inter-fulcrum distance L: L=16×h (64 mm)
· Sample length: 80 mm (three-point average)
· Width: 10 mm (three-point average)
· Thickness: 4 mm=h (three-point average)
· Test temperature: 25°C

Using the prepared specimen (5 mm×5 mm×5 mm), TMA measurement was performed under the following conditions, and the linear expansion coefficient and dimensional change rate were determined from the measured values.
· Measuring apparatus: "TMA Q400" manufactured by TA Instruments
· Measurement mode: compression (macroexpansion probe, diameter: 6.07 mm)
· Load: 0.05 N
· Measurement temperature range: from 20 to 310°C
. Temperature rise rate: 5°C/min
· Measurement atmosphere: He gas (50 ml/min)
· Analysis conditions:
   The value was determined by performing the analysis at 30 to 200°C (low-temperature region) and 200 to 300°C (high-temperature region) for the linear expansion coefficient and at 30 to 300°C for the dimensional change rate.

### <Results>

The results are shown together in Table 2.

**Table 2**

| | (C) SX-1 | DMA | | TMA | | | Tensilon | |
|---|---|---|---|---|---|---|---|---|
| | | E" | tan δ | Linear Expansion Coefficient [µm/(m·°C)] | | Dimensional Change Rate | Modulus | Elongation at Break |
| | | [°C] | [°C] | Low-Temperature Region | High-Temperature Region | [%] | [GPa] | [%] |
| Example 5 | added | 255 | 287 | 50.7 | 101.7 | 1.88 | 3.79 | 5.15 |
| Comparative Example 6 | none | 219 | 270 | 55.8 | 123.3 | 2.18 | 3.73 | 5.14 |

It is seen that the molded article of Example 5 cured using the (C) cyclic carbodiimide compound has high heat resistance and dimensional stability while having mechanical properties equal to or higher than those of the molded article of Comparative Example 6.

### INDUSTRIAL APPLICABILITY

The thermosetting resin composition of the present invention is utilized in various applications by making use of its excellent physical properties and workability and is favorably used, for example, as a prepreg, a printed wiring board material such as copper-clad laminate, a structural material, a casting resin, etc.

## Claims

1. A thermosetting resin composition comprising:
(A) a cyanate ester compound and/or (B) an unsaturated imide compound, and
(C) a cyclic carbodiimide compound;
Wherein, when present, the (A) cyanate ester compound is a compound represented by the following formula (1): 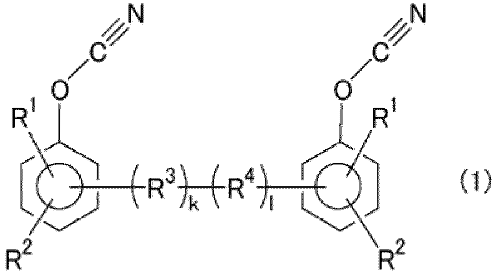 wherein R¹ and R² are the same or different and each represents hydrogen atom, an alkyl group or alkyl halide group having from 1 to 20 carbon atoms, or a halogen group;
R³ are the same or different and each represents an organic group represented by the following chemical formula: 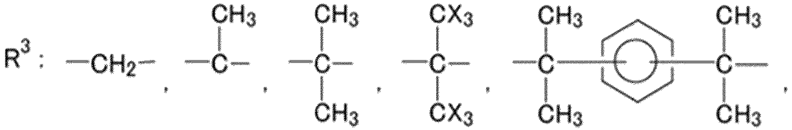 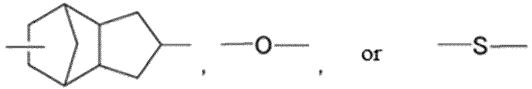 wherein R⁴ are the same or different and each represents an organic group represented by the following chemical formula: 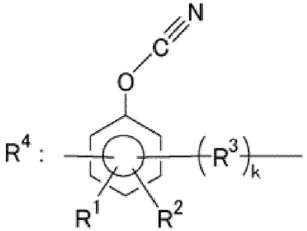
wherein k is 0 or 1; and l represents an integer of 0 to 10;
wherein, when present, the unsaturated imide compound (B) is a bismaleimide compound;
and wherein the (C) cyclic carbodiimide compound is a compound represented by the following formula (2-1): 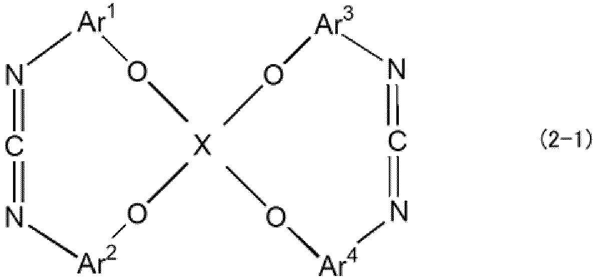
wherein X is a tetravalent group represented by the following formula (i): 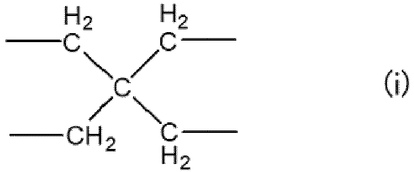
wherein each of Ar¹ to Ar⁴ is independently a divalent monocyclic or fused polycyclic alicyclic group, aromatic group or heterocyclic group, which may have a substituent, wherein the substituent is selected from the group consisting of an alkyl group having from 1 to 20 carbon atoms, an aryl group having from 6 to 15 carbon atoms, a halogen atom, a nitro group, an amide group, a hydroxyl group, an ester group, an ether group and an aldehyde group and when each of Ar¹ to Ar⁴ is a heterocyclic group, the heterocyclic group contains a heteroatom selected from the group consisting of O, N, S and P.

2. The thermosetting resin composition according to claim 1, comprising the cyanate ester compound (A).

3. The thermosetting resin composition according to claim 1, comprising the unsaturated imide compound (B).

4. The thermosetting resin composition according to any one of claims 1 to 3, comprising:
the (A) cyanate ester compound,
the (B) unsaturated imide compound, and
the (C) cyclic carbodiimide compound.

5. The thermosetting resin composition according to claim 4, wherein the (C) cyclic carbodiimide compound is contained in a range of 1 to 30 parts by mass per 100 parts by mass of the total of the (A) cyanate ester compound and the (B) unsaturated imide compound.

6. The thermosetting resin composition according to claim 4 or 5, wherein the (A) cyanate ester compound and the (B) unsaturated imide compound are contained at a mass ratio of 90:10 to 50:50.

7. A molded article comprising a cured product of the thermosetting resin composition according to any one of claims 1 to 6.

8. A prepreg comprising a reinforcing fiber substrate impregnated with the thermosetting resin composition according to any one of claims 1 to 6.

9. A fiber-reinforced composite material obtained by curing the prepreg according to claim 8.

## Patentansprüche

1. Eine duroplastische Harzzusammensetzung, umfassend:
(A) eine Cyanatesterverbindung und/oder
(B) eine ungesättigte Imidverbindung und
(C) eine cyclische Carbodiimidverbindung;
wobei, wenn vorhanden, die (A) Cyanatesterverbindung eine Verbindung, dargestellt durch die folgende Formel (1), ist: 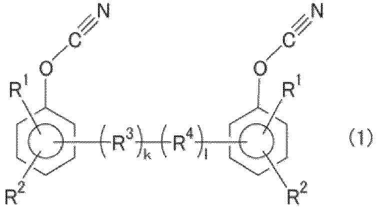 wobei R¹ und R² gleich oder verschieden sind und jeweils Wasserstoffatom, eine Alkylgruppe oder Alkylhalogenidgruppe mit 1 bis 20 Kohlenstoffatomen oder eine Halogengruppe bedeuten;
R³ gleich oder verschieden sind und jeweils eine organische Gruppe, dargestellt durch die folgende chemische Formel, bedeuten: 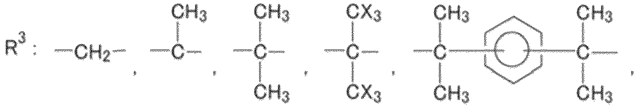 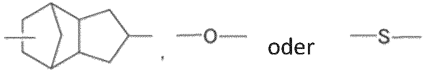 wobei R⁴ gleich oder verschieden sind und jeweils eine organische Gruppe, dargestellt durch die folgende chemische Formel, bedeuten: 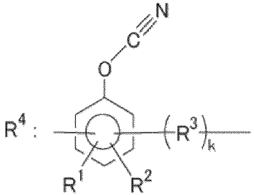 wobei k 0 oder 1 ist; und I eine ganze Zahl von 0 bis 10 darstellt;
wobei, wenn vorhanden, die ungesättigte Imidverbindung (B) eine Bismaleimidverbindung ist; und wobei die (C) cyclische Carbodiimidverbindung eine Verbindung, dargestellt durch die folgende Formel (2-1), ist: 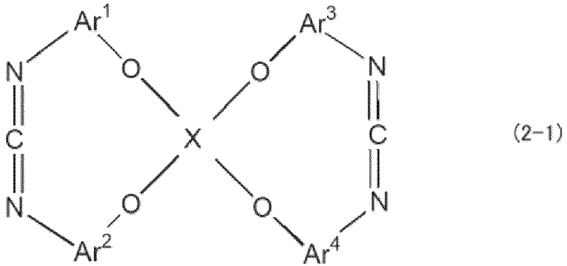 wobei X eine vierwertige Gruppe, dargestellt durch die folgende Formel (i), ist: 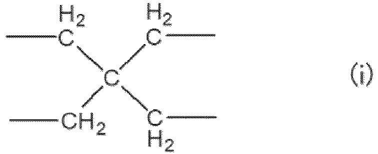 wobei jedes von Ar¹ bis Ar⁴ unabhängig eine zweiwertige monocyclische oder kondensierte polycyclische alicyclische Gruppe, aromatische Gruppe oder heterocyclische Gruppe ist, die einen Substituenten aufweisen kann, wobei der Substituent ausgewählt ist aus der Gruppe bestehend aus einer Alkylgruppe mit 1 bis 20 Kohlenstoffatomen, einer Arylgruppe mit 6 bis 15 Kohlenstoffatomen, einem Halogenatom, einer Nitrogruppe, einer Amidgruppe, einer Hydroxylgruppe, einer Estergruppe, einer Ethergruppe und einer Aldehydgruppe, und wenn jedes von Ar¹ bis Ar⁴ eine heterocyclische Gruppe ist, die heterocyclische Gruppe ein Heteroatom, ausgewählt aus der Gruppe bestehend aus O, N, S und P, enthält.

2. Die duroplastische Harzzusammensetzung nach Anspruch 1, umfassend die Cyanatesterverbindung (A).

3. Die duroplastische Harzzusammensetzung nach Anspruch 1, umfassend die ungesättigte Imidverbindung (B).

4. Die duroplastische Harzzusammensetzung nach einem der Ansprüche 1 bis 3, umfassend:
die (A) Cyanatesterverbindung,
die (B) ungesättigte Imidverbindung und
die (C) cyclische Carbodiimidverbindung.

5. Die duroplastische Harzzusammensetzung nach Anspruch 4, wobei die (C) cyclische Carbodiimidverbindung in einem Bereich von 1 bis 30 Masseteilen pro 100 Masseteile der Gesamtheit der (A) Cyanatesterverbindung und der (B) ungesättigten Imidverbindung enthalten ist.

6. Die duroplastische Harzzusammensetzung nach Anspruch 4 oder 5, wobei die (A) Cyanatesterverbindung und die (B) ungesättigte Imidverbindung in einem Massenverhältnis von 90:10 bis 50:50 enthalten sind.

7. Ein Formgegenstand, umfassend ein gehärtetes Produkt aus der duroplastischen Harzzusammensetzung nach einem der Ansprüche 1 bis 6.

8. Ein Prepreg, umfassend ein Verstärkungsfasersubstrat, imprägniert mit der duroplastischen Harzzusammensetzung nach einem der Ansprüche 1 bis 6.

9. Ein faserverstärkter Verbundwerkstoff, erhalten durch Härten des Prepregs nach Anspruch 8.

## Revendications

1. Composition de résine thermodurcissable comprenant :
(A) un composé ester cyanate et/ou (B) un composé imide insaturé, et
(C) un composé carbodiimide cyclique ;
dans laquelle, quand il est présent, le composé ester cyanate (A) est un composé représenté par la formule (1) suivante : 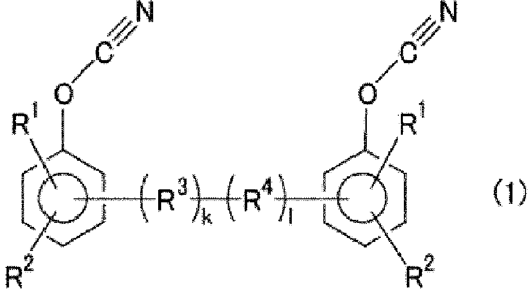 dans laquelle R¹ et R² sont identiques ou différents et représentent chacun un atome d'hydrogène, un groupe alkyle ou un groupe halogénoalkyle ayant 1 à 20 atomes de carbone, ou un groupe halogéno ;
les R³ sont identiques ou différents et représentent chacun un groupe organique représenté par la formule chimique suivante : 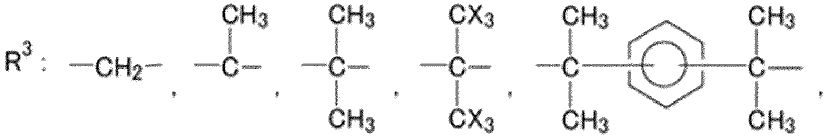 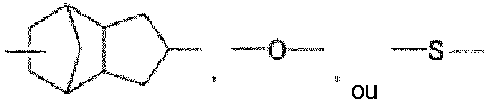 dans laquelle les R⁴ sont identiques ou différents et représentent chacun un groupe organique représenté par la formule chimique suivante : 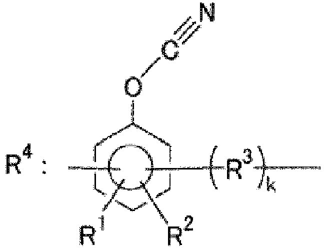 dans laquelle k vaut 0 ou 1 ; et I représente un entier de 0 à 10 ;
dans laquelle, quand il est présent, le composé imide insaturé (B) est un composé bismaléimide ;
et dans laquelle le composé carbodiimide cyclique (C) est un composé représenté par la formule (2-1) suivante : 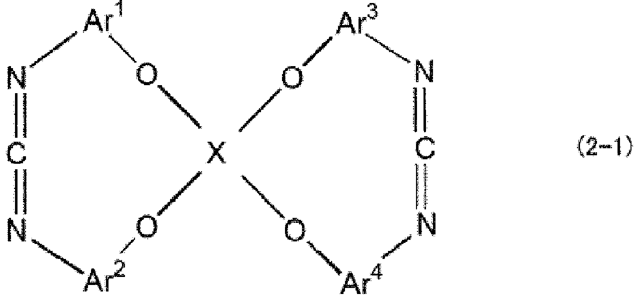
dans laquelle X est un groupe tétravalent représenté par la formule (i) suivante : 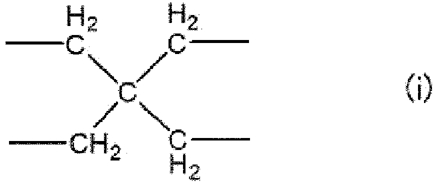
dans laquelle chacun d'Ar¹ à Ar⁴ est indépendamment un groupe hétérocyclique, un groupe aromatique ou un groupe alicyclique polycyclique condensé ou monocyclique divalent, qui peut porter un substituant, dans laquelle le substituant est choisi dans l'ensemble constitué par un groupe alkyle ayant 1 à 20 atomes de carbone, un groupe aryle ayant 6 à 15 atomes de carbone, un atome d'halogène, un groupe nitro, un groupe amide, un groupe hydroxyle, un groupe ester, un groupe éther et un groupe aldéhyde et, quand chacun d'Ar¹ à Ar⁴ est un groupe hétérocyclique, le groupe hétérocyclique contient un hétéroatome choisi dans l'ensemble constitué par O, N, S et P.

2. Composition de résine thermodurcissable selon la revendication 1, comprenant le composé ester cyanate (A).

3. Composition de résine thermodurcissable selon la revendication 1, comprenant le composé imide insaturé (B).

4. Composition de résine thermodurcissable selon l'une quelconque des revendications 1 à 3, comprenant :
le composé ester cyanate (A),
le composé imide insaturé (B), et
le composé carbodiimide cyclique (C).

5. Composition de résine thermodurcissable selon la revendication 4, dans laquelle le composé carbodiimide cyclique (C) est contenu à raison de 1 à 30 parties en masse pour 100 parties en masse du total du composé ester cyanate (A) et du composé imide insaturé (B).

6. Composition de résine thermodurcissable selon la revendication 4 ou 5, dans laquelle le composé ester cyanate (A) et le composé imide insaturé (B) sont contenus en un rapport en masse de 90/10 à 50/50.

7. Article moulé comprenant un produit durci de la composition de résine thermodurcissable selon l'une quelconque des revendications 1 à 6.

8. Préimprégné comprenant un substrat de fibres de renforcement imprégné par la composition de résine thermodurcissable selon l'une quelconque des revendications 1 à 6.

9. Matériau composite renforcé par des fibres obtenu par durcissement du préimprégné selon la revendication 8.
